(19) Europäisches Patentamt
European Patent Office
Office européen des brevets

(11) EP 3 354 391 A1

(12) EUROPEAN PATENT APPLICATION

(43) Date of publication:
01.08.2018 Bulletin 2018/31

(51) Int Cl.:
B23H 7/10 (2006.01)          B23H 7/20 (2006.01)
G05B 19/404 (2006.01)

(21) Application number: 18153152.6

(22) Date of filing: 24.01.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 26.01.2017 JP 2017011761

(71) Applicant: FANUC CORPORATION
Oshino-mura
Minamitsuru-gun
Yamanashi 401-0597 (JP)

(72) Inventors:
• Yoshida, Masayuki
Oshino-mura, Minamitsuru-gun,, Yamanashi
401-0597 (JP)
• Suzuki, Kouji
Oshino-mura, Minamitsuru-gun,, Yamanashi
401-0597 (JP)

(74) Representative: Schmidt, Steffen J.
Wuesthoff & Wuesthoff
Patentanwälte PartG mbB
Schweigerstrasse 2
81541 München (DE)

(54) CONTROLLER FOR WIRE ELECTRICAL DISCHARGE MACHINE

(57)    A controller (18) for a wire electrical discharge machine (10) includes: an abnormality location calculating unit (94) that calculates an abnormality location at a time when an abnormality of the wire electrode (12) has occurred on a wire running path; a solution information storage unit (106) that stores abnormality locations and solution information in association with each other; a priority setting unit (98) that sets a degree of priority for each of the abnormality locations according to a history of the abnormality location; and a display control unit (100) that causes a display unit (26) to display the solution information corresponding to each of the abnormality locations by taking the degree of priority into account.

FIG. 2

**Description**

BACKGROUND OF THE INVENTION

Field of the Invention:

The present invention relates to a controller for a wire electrical discharge machine for displaying solution information for solving a trouble as to running of a wire electrode, on a display unit.

Description of the Related Art:

Japanese Laid-Open Patent Publication No. 04-117061 discloses a configuration in which, upon the occurrence of a trouble in an apparatus, the page number in the operator's manual of the content that corresponds to the trouble is displayed.

SUMMARY OF THE INVENTION

In a wire electrical discharge machine, there are many types of troubles that occur in a running system of a wire electrode. For this reason, even if the technique of the above Japanese Laid-Open Patent Publication No. 04-117061 is applied in order to display solution information for solving a trouble, there is a concern that many pieces of solution information are displayed so that it would take a long time for the operator to find appropriate solution information.

The present invention has been devised in order to solve the above problem, it is therefore an object of the present invention to provide a controller for a wire electrical discharge machine that enables an operator to find appropriate solution information in a shorter time.

The aspect of the present invention resides in a controller for a wire electrical discharge machine, configured to control a display unit so as to display solution information for solving a trouble in a running system of a wire electrode, including: an abnormality location calculating unit configured to calculate an abnormality location at a time when an abnormality of the wire electrode has occurred on a wire traveling path in the wire electrical discharge machine in operation; a history storage unit configured to store a history of the abnormality location; a solution information storage unit configured to store abnormality locations and solution information in association with each other; a priority setting unit configured to set a degree of priority for each of the abnormality locations according to the history of the abnormality location; and a display control unit configured to cause the display unit to display the solution information corresponding to each of the abnormality locations by taking the degree of priority into account.

According to the present invention, the operator can find appropriate solution information in a shorter time.

The above and other objects features and advantages of the present invention will become more apparent from the following description when taken in conjunction with the accompanying drawings in which a preferred embodiment of the present invention is shown by way of illustrative example.

BRIEF DESCRIPTION OF THE DRAWINGS

FIG. 1 is a diagram schematically showing the overall configuration of a wire electrical discharge machine according to a first embodiment of the present invention;

FIG. 2 is a block diagram of a controller according to the first embodiment;

FIG. 3 is a diagram showing a range of regions to which retry positions belong, according to the first embodiment;

FIG. 4 is a diagram showing regions to which wire break positions belong, according to the first embodiment;

FIG. 5 is a diagram showing regions to which wire cut positions belong, according to the first embodiment;

FIG. 6 is a table showing the number of failures in automatic wire feeding in each region, according to the first embodiment;

FIG. 7 is a table showing the number of times the wire electrode broke in each region, according to the first embodiment;

FIG. 8 is a table showing the number of times the wire electrode was cut in each region, according to the first embodiment;

FIG. 9 is a table showing the correspondence between retry positions and reference pages, according to the first embodiment;

FIG. 10 is a table showing the correspondence between the wire break positions and reference pages, according to the first embodiment;

FIG. 11 is a table showing the correspondence between wire cut positions and reference pages, according to the first embodiment;

FIG. 12 is a flowchart showing a processing flow in a priority setting unit and a display control unit, according to the first embodiment;

FIG. 13 is a table showing reference pages corresponding to each abnormality location, according to the first embodiment;

FIG. 14 is a correspondence table between abnormality locations rearranged in order of priority and reference pages, according to the first embodiment;

FIG. 15 is a table showing maintenance interval and the remaining time for each maintenance item of a wire electrical discharge machine, according to the second embodiment;

FIG. 16 is a correspondence table between abnormality locations rearranged in order of compensated priority and reference pages, according to the second embodiment;

FIG. 17 is a table showing reference pages in an operator's manual and the number of times the operator referred to the reference pages, according to the third embodiment;

FIG. 18 is a correspondence table between abnormality locations and reference pages in which reference pages that were referred to more frequently by the operator are listed above reference pages that were referred to less frequently, according to the third embodiment;

FIG. 19 is a table showing reference pages in an operator's manual and the totals of the evaluation scores given for the reference pages by the operator, according to the fourth embodiment;

FIG. 20 is a correspondence table between abnormality locations and reference pages, in which reference pages highly evaluated by the operator is displayed above the other reference pages, according to the fourth embodiment;

FIG. 21 is a table showing reference pages in an operator's manual and other reference pages that were viewed by the operator after firstly referring to a reference page, according to the fifth embodiment; and

FIG. 22 is a correspondence table between abnormality locations and reference pages, in which the other reference pages that were referred to by the operator after firstly referring to a reference page are displayed, according to the fifth embodiment.

## DESCRIPTION OF THE PREFERRED EMBODIMENTS

Now, the present invention will be detailed by describing embodiments of the invention. The following embodiments will not limit the invention according to the claims. Not all combinations of features described in the embodiments are necessarily essential to the solving means of the invention.

[First Embodiment]

[Configuration of Wire Electrical Discharge Machine]

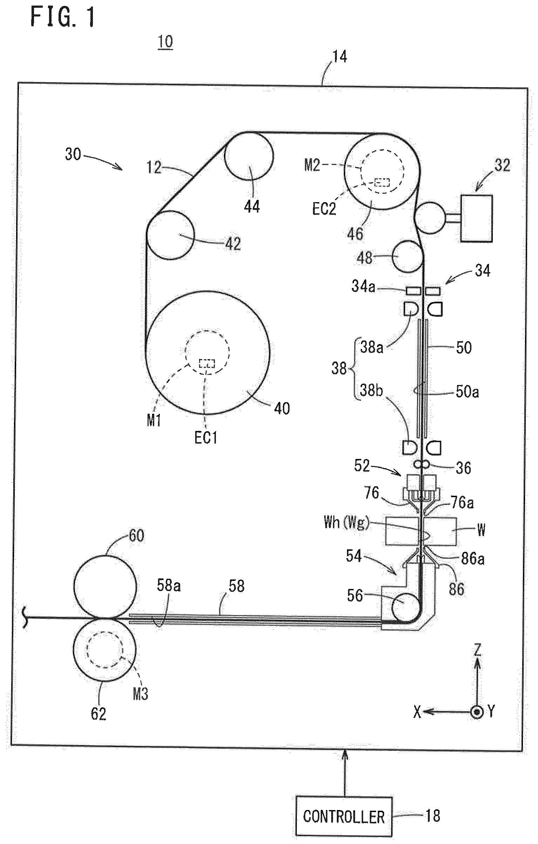

FIG. 1 is a diagram schematically showing the overall configuration of a wire electrical discharge machine 10. The wire electrical discharge machine 10 is a machine tool that performs machining (electrical discharge machining) on a workpiece W by electric discharge generated by applying voltage across an electrode gap (clearance) between a wire electrode 12 and the workpiece W. The wire electrode 12 is made of, for example, metal material such as tungsten-based, copper alloy-based, brass-based metal, or the like. On the other hand, the workpiece W is made of, for example, a metal material such as an iron-based material, a superhard material (tungsten carbide), or the like.

The wire electrical discharge machine 10 includes, at least, a machine tool main body 14 and a controller 18. The machine tool main body 14 includes a wire feeding mechanism 30 that feeds the wire electrode 12 toward the workpiece W and further conveys the wire electrode 12 that has passed through a machining start hole Wh or a machining groove Wg of the workpiece W to an unillustrated collecting box. The machining start hole Wh is a hole that allows the wire electrode 12 to pass through the workpiece W before the machining of the workpiece W is started, whereas the machining groove Wg is a groove formed by electrical discharge machining by the wire electrode 12. The workpiece W is supported on a table (not shown) movable along a plane (XY plane).

[Details of Wire Feeding Mechanism]

The wire feeding mechanism 30 at least includes, in the order from the upstream side with respect to the feeding (running) direction of the wire electrode 12, a wire bobbin 40, guide rollers 42, 44, a brake roller 46, a guide roller 48, an upper pipe 50, an upper wire guide 52, a lower wire guide 54, a lower guide roller 56, a lower pipe 58, a pinch roller 60 and a feed roller 62. This wire feeding mechanism 30 defines a wire feeding (running) path of the wire electrode 12. The workpiece W is located between the upper wire guide 52 and the lower wire guide 54.

The wire bobbin 40 is rotated by a torque given from a motor M1 having an encoder EC1, which is driven under the control of the controller 18. The wire electrode 12 of a long length is wound on the wire bobbin 40, and is fed as the wire bobbin 40 rotates.

The wire electrode 12 fed from the wire bobbin 40 is stretched over the guide rollers 42, 44. The guide rollers 42, 44 change the feeding direction of the wire electrode 12 fed out from the wire bobbin 40 and guide the wire electrode 12 toward the brake roller 46.

The brake roller 46 is rotated by a torque given from a motor M2 having an encoder EC2, which is driven under the control of the controller 18. The brake roller 46 can convey the wire electrode 12 without slipping and can apply a braking force on the wire electrode 12 by changing the torque applied to the brake roller 46.

The wire electrode 12 sent from the brake roller 46 is stretched over (put on) the guide roller 48 and then fed to the upper pipe 50. A tension detector 32 is arranged between the brake roller 46 and the guide roller 48. The tension detector 32 is a sensor for detecting the tension of the wire electrode 12. A flexure detector 34 is provided between the guide roller 48 and the upper pipe 50. The flexure detector 34 is a sensor that detects the flexure of the wire electrode 12. The flexure detector 34 has an annular electrode 34a, through which the wire electrode 12 is inserted. When the wire electrode 12 touches the annular electrode 34a, the flexure detector 34 outputs a contact signal (flexure signal) as a detection signal to the controller 18.

The wire electrode 12 fed to the upper pipe 50 advances downward (in the negative Z-direction) through an insertion hole 50a of the upper pipe 50 and is sent to the upper wire guide 52. A tip detector 36 is provided between the upper pipe 50 and the upper wire guide 52. The tip detector 36 is a sensor that detects that the tip on the upstream side of the wire electrode 12 has passed through the position of the tip detector 36. The wire electrode 12 sent to the upper wire guide 52 passes through the machining start hole Wh or the machining groove Wg of the workpiece W located between the upper wire guide 52 and the lower wire guide 54 and is then sent toward the lower wire guide 54 (in the negative Z-direction).

The wire electrode 12 sent to the lower wire guide 54 is stretched over (put on) the lower guide roller 56 arranged inside the lower wire guide 54 and then sent to the lower pipe 58. The wire electrode 12 sent to the lower pipe 58 passes through an insertion hole 58a of the lower pipe 58 and then is fed into the collecting box by the pinch roller 60 and the feed roller 62 that nip the wire electrode 12. The feed roller 62 is rotated by a torque given from a motor M3 which is driven under the control of the controller 18.

[Configuration of Controller]

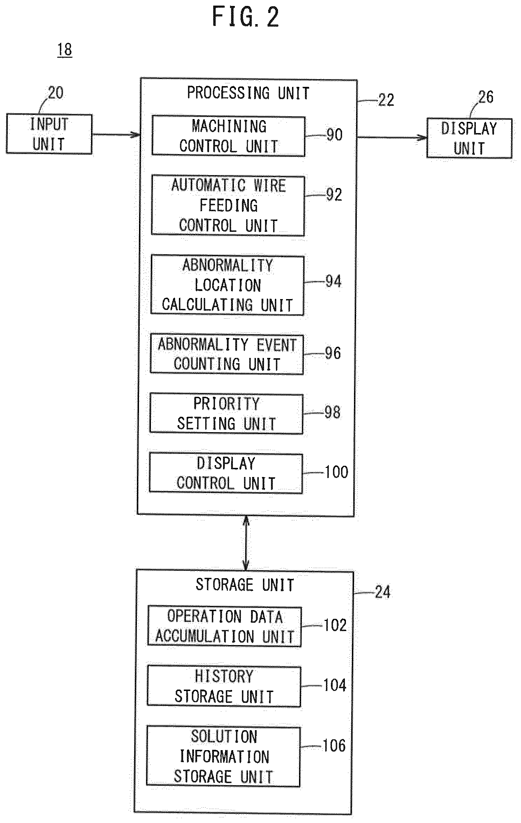

FIG. 2 is a block diagram of the controller 18. The controller 18 includes at least an input unit 20, a processing unit 22, a storage unit 24 and a display unit 26. The input unit 20 is an operation unit that is operated by an operator to input information, commands, etc. The input unit 20 is composed of a numeric keypad for inputting numerical data, various function keys (for example, a power button, etc.), a keyboard, a touch panel and the like.

The processing unit 22 is a processor such as a CPU or the like. The storage unit 24 stores data and the like necessary for processing in the processing unit 22, and also functions as a buffer memory. The display unit 26 is made up of a liquid crystal display, an organic EL display or the like, and displays thereon necessary information etc. When a touch panel is used as the input unit 20, the touch panel is arranged in the display screen of the display unit 26 so that the input unit 20 may be integrated with the display unit 26.

[Configuration of Processing Unit]

The processing unit 22 includes at least a machining control unit 90, an automatic wire feeding control unit 92, an abnormality location calculating unit 94, an abnormality event counting unit 96, a priority setting unit 98 and a display control unit 100.

The machining control unit 90 controls the machine tool main body 14 so as to machine the workpiece W by applying voltage across the electrode gap between the wire electrode 12 and the workpiece W. The automatic wire feeding control unit 92 controls the machine tool main body 14 so as to cut the wire electrode 12 and start again automatic wire feeding at the time of, breaking of the wire electrode 12 during machining, changing of the position to be machined, replacing of the workpiece W, failure of automatic wire feeding, or some other events. The abnormality location calculating unit 94 calculates the tip position of the wire electrode 12 when an abnormality has occurred at the wire electrode 12 on the running path, as an abnormality location (a location of abnormality). The abnormality event counting unit 96 counts the number of occurrences of abnormality in the wire electrode 12 for each abnormality location. The priority setting unit 98 sets different degrees of priority on pieces of solution information for solving the trouble of the running system of the wire electrode 12. The display control unit 100 controls the display unit 26 so as to display solution information, based on the degrees of priority set by the priority setting unit 98.

[Details of Machining Control Unit]

The machining control unit 90 controls the motors M1, M2, M3 to drive the wire bobbin 40, the brake roller 46 and the feed roller 62 so as to feed the wire electrode 12 while applying voltage between the wire electrode 12 and the workpiece W. The machining control unit 90 also controls an unillustrated working fluid supply device to supply a dielectric working fluid to the workpiece W from a nozzle hole 76a of an upper nozzle 76 and a nozzle hole 86a of a lower nozzle 86. Further, the machining control unit controls an unillustrated motor to thereby move the table supporting the workpiece W along the plane and machines the workpiece W.

When the wire electrode 12 is broken in machining the workpiece W, the machining control unit 90 temporarily stops the machining of the workpiece W, and the automatic wire feeding control unit 92 cuts the wire electrode 12 and automatically feeds the wire electrode 12. Breaking of the wire electrode 12 can be determined based on a detection signal from the tension detector 32. When the wire electrode 12 is broken, the machining control unit 90 notifies the abnormality location calculating unit 94 of the occurrence of the wire breaking.

The machining control unit 90 transmits the detection signals of the encoders EC1, EC2 and the tension detector 32 during the machining to an operation data accumulation unit 102 in the storage unit 24. The operation data accumulation unit 102 stores the detection signals received from the encoders EC1, EC2 and the tension detector 32 time-sequentially.

[Automatic Wire Feeding Control Unit]

The automatic wire feeding control unit 92 causes cutting electrodes 38 (a chuck electrode 38a and a detection electrode 38b) to be closed by driving actuators so that the cutting electrodes 38 (each of the chuck electrode 38a and the detection electrode 38b) grip the wire electrode 12 therebetween. Then, the automatic wire feeding control unit 92 controls an unillustrated cutting power supply so as to flow an electric current between the chuck electrode 38a and the detection electrode 38b and heat the wire electrode 12 in the insertion hole 50a of the upper pipe 50 with Joule heat. At the same time as the current is supplied, the automatic wire feeding control unit 92 controls the motor M1 so as to apply a cutting torque to the brake roller 46 in the direction to take up the wire electrode 12. At this time, the gripping force applied on the wire electrode 12 by the chuck electrode 38a is set to a force that allows the wire electrode 12 to move relative to the chuck electrode 38a. On the other hand, the gripping force applied on the wire electrode 12 by the detection electrode 38b is set to a force that does not allow the wire electrode 12 to move relative to the detection electrode 38b.

In parallel with this, the automatic wire feeding control unit 92 controls an unillustrated cooling fluid supply device so as to supply the cooling fluid into the insertion hole 50a from above the upper pipe 50. Since this cooling fluid flows downward from the top of the insertion hole 50a of the upper pipe 50, the wire electrode 12 on the upper side of the upper pipe 50 is cooled most, and the degree of cooling of the wire electrode 12 decreases toward the lower side. Therefore, the temperature of the wire electrode 12 gradually increases from the upper side toward the lower side of the upper pipe 50, so that the temperature of the wire electrode 12 near the detection electrode 38b becomes highest. Further, since the wire electrode 12 is pulled upward, the wire electrode 12 is usually cut at a position near the detection electrode 38b where the temperature is the highest. In other words, the tip position of the cut wire electrode 12 on the upstream side is usually in the vicinity of the detection electrode 38b.

After the wire electrode 12 is cut, the motors M1, M2 are controlled to drive the wire bobbin 40 and the brake roller 46, whereby the wire electrode 12 wound around the wire bobbin 40 is fed along the running path defined by the wire feeding mechanism 30 so as to pass through the upper wire guide 52, the workpiece W, the lower wire guide 54 and others, and is then gripped between the pinch roller 60 and the feed roller 62. When gripped by the pinch roller 60 and the feed roller 62, the tension of the wire electrode 12 detected by the tension detector 32 becomes equal to or greater than a predetermined level, and the automatic wire feeding is completed.

When the tip of the wire electrode 12 gets stuck on an object (for example, the upper wire guide 52, the workpiece W, the lower wire guide 54, etc.) located on the running path during automatic wire feeding, the wire electrode 12 is flexed or bends. As a result, the automatic wire feeding control unit 92 can determine that the wire electrode 12 has been flexed (has stuck) from the detection signal of the flexure detector 34. That is, it can be determined that the automatic wire feeding has failed. When it is determined that the wire electrode 12 has been flexed (got stuck), the automatic wire feeding control unit 92 controls the motors M1, M2 to rewind the wire electrode 12 and try again automatic wire feeding by feeding the wire electrode 12 toward the pinch roller 60 and the feed roller 62. Hereinbelow, trying again automatic wire feeding after a failure of the feeding will be referred to as a retry. If the number of times of retry exceeds a predetermined value, retry is performed again after cutting the wire electrode 12.

The automatic wire feeding control unit 92 transmits the detection signals of the encoders EC1, EC2, the tension detector 32 and the flexure detector 34 during cutting and automatic wire feeding of the wire electrode 12, to the operation data accumulation unit 102 in the storage unit 24. The operation data accumulation unit 102 stores the received detection signals of the encoders EC1, EC2, the tension detector 32 and the flexure detector 34 time-sequentially.

When the wire electrode 12 is cut, the automatic wire feeding control unit 92 notifies the abnormality location calculating unit 94 of the fact. Whether the wire electrode 12 has been cut can be determined from the fact that the tension of the wire electrode 12 detected by the tension detector 32 becomes equal to or lower than a predetermined level. Further, when automatic wire feeding fails, the automatic wire feeding control unit 92 notifies the abnormality location calculating unit 94 of the fact.

[Details of Abnormality Location Calculating Unit]

When receiving a notification of breaking of the wire electrode 12 from the machining control unit 90, or receiving a notification of failure in automatic wire feeding or a notification of cutting of the wire electrode 12 from the automatic wire feeding control unit 92, the abnormality location calculating unit 94 determines that an abnormality of the wire electrode 12 has occurred on the running path. Then, the abnormality location calculating unit 94 calculates the tip position of the wire electrode 12 at the time of reception of the above notification, as an abnormality location.

The tip position of the wire electrode 12 at the time of failure of automatic wire feeding can be determined as follows. After a notification that the wire electrode 12 was cut is received from the automatic wire feeding control unit 92, the wire electrode 12 is fed out to start automatic wire feeding. The wire first passes through the tip detector 36, and then the automatic wire feeding fails somewhere. In this case, the abnormality location calculating unit 94 reads information of the detection signals of the encoders EC1, EC2 indicative of a duration from when the tip detector 36 detected the passage of the tip of the wire electrode 12 therethrough until a notification of failure of the automatic wire feeding was received, from the operation data accumulation unit 102. The abnormality location calculating unit 94 calculates the feed distance by which the wire electrode 12 was fed out from the position of the tip detector 36, based on the detection signals of the encoders EC1, EC2 read from the operation data accumulation unit 102. The abnormality location calculating unit 94 determines the tip position of the wire electrode 12 when the automatic wire feeding failed, by adding the calculated feed distance to the position of the tip detector 36. Hereinafter, the tip position of the wire electrode 12 when the automatic wire feeding failed is referred to as a retry position.

The tip position of the wire electrode 12 at the time of breaking of the wire electrode 12 can be determined as follows. The abnormality location calculating unit 94 reads the detection signals of the encoders EC1, EC2 indicative of a duration from when a notification of breaking of the wire electrode 12 was received from the machining control unit 90 until the tip detector 36 detected the passage of the tip of the wire electrode 12 therethrough during rewinding of the wire electrode 12, from the operation data accumulation unit 102. The abnormality location calculating unit 94 calculates the rewind distance by which the wire electrode 12 was rewound to the position of the tip detector 36, based on the detection signals of the encoders EC1, EC2 read from the operation data accumulation unit 102. The abnormality location calculating unit 94 determines the tip position of the wire electrode 12 when the wire electrode 12 broke, by adding the calculated rewind distance to the position of the tip detector 36. Hereinafter, the tip position of the wire electrode 12 when the wire electrode 12 broke is referred to as a wire break position.

The tip position of the wire electrode 12 at the time of cutting of the wire electrode 12 can be determined as follows. The abnormality location calculating unit 94 reads the detection signals of the encoders EC1, EC2 indicative of a duration from when a notification of cutting of the wire electrode 12 was received from the automatic wire feeding control unit 92 until the tip detector 36 detected the passage of the tip of the wire electrode 12 therethrough during feeding of the wire electrode 12, from the operation data accumulation unit 102. The abnormality location calculating unit 94 calculates the feed distance by which the wire electrode 12 was fed to the position of the tip detector 36, based on the detection signals of the encoders EC1, EC2 read from the operation data accumulation unit 102. The abnormality location calculating unit 94 determines the tip position of the wire electrode 12 when the wire electrode 12 was cut, by subtracting the calculated feed distance from the position of the tip detector 36. Hereinafter, the tip position of the wire electrode 12 when the wire electrode 12 was cut is referred to as a wire cut position.

[Details of Abnormality Event Counting Unit]

The abnormality event counting unit 96 divides the running path of the wire electrode 12 into multiple regions, and counts the number of times abnormality of the wire electrode 12 has occurred (which will also be referred to the number of occurrences of abnormality of the wire electrode 12 or the number of abnormality events of the wire electrode 12) for each of multiple regions to which the abnormality locations belong. The abnormality location indicates the retry position, the wire break position, and the wire cut position. The abnormality event counting unit 96 counts the number of occurrences of abnormality as to each of the retry position, the wire break position and the wire cut position. The number of occurrences of abnormality indicates the number of times the automatic wire feeding failed, the number of times the wire electrode 12 broke and the number of times the wire electrode 12 was cut. It should be noted herein that the abnormality event counting unit 96 does not count when the wire cut position is located in the vicinity of the detection electrode 38b because no abnormality is not occurring in the wire electrode 12 in this case. That is, the abnormality event counting unit 96 counts as occurrence of a wire cutting abnormality only when the wire electrode 12 is cut at a position away from the detection electrode 38b.

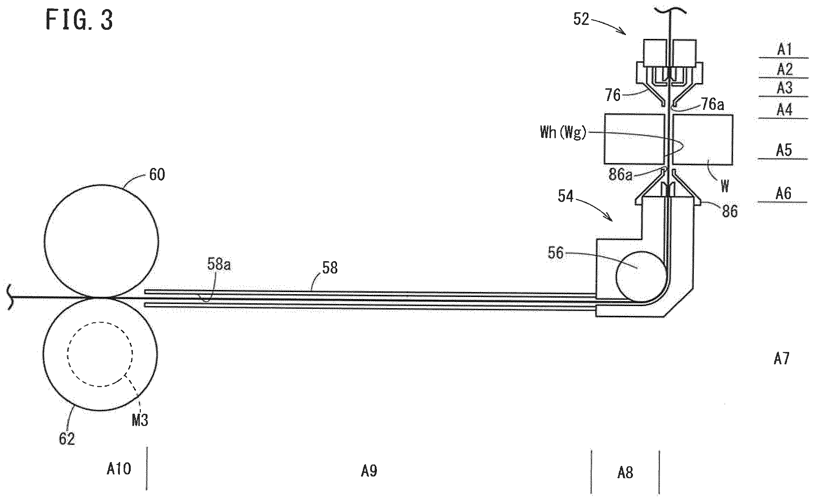

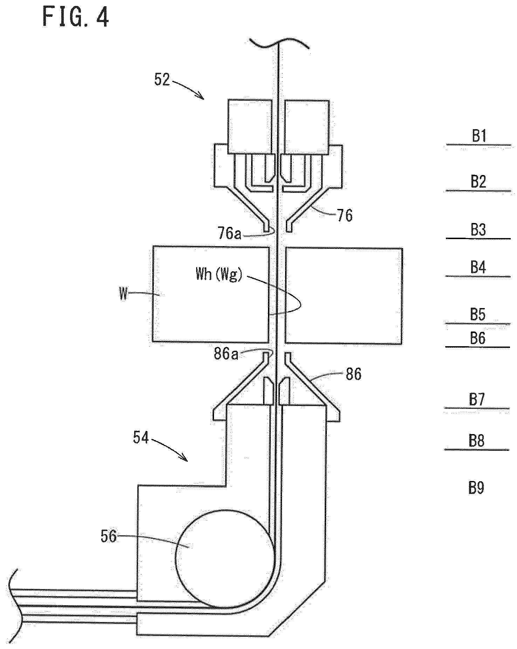

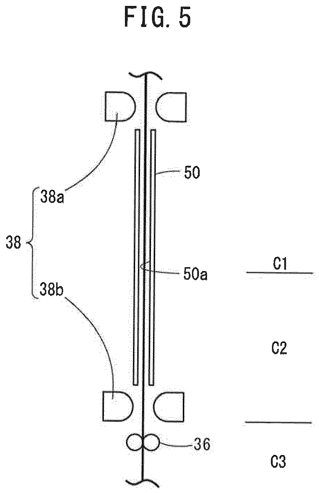

Dividing methods of the running path into regions differ depending on the type of abnormality location, i.e., the retry position, the wire break position and the wire cut position. FIG. 3 is a diagram showing regions to which the retry positions belong. As shown in FIG. 3, the regions to which the retry positions belong range from the upper wire guide 52 to the pinch roller 60 and the feed roller 62 on the running path. This range is divided into regions A1 to A10. FIG. 4 is a diagram showing regions to which the wire break positions belong. As shown in FIG. 4, the regions to which the wire break positions belong range between the upper wire guide 52 and the lower wire guide 54 on the running path. This range is divided into regions B1 to B9. FIG. 5 is a diagram showing regions to which the wire cut positions belong. As shown in FIG. 5, the regions to which the wire cut positions belong range between the middle of the upper pipe 50 and the tip detector 36. This range is divided into regions C1 to C3.

The abnormality event counting unit 96 counts the number of occurrences of abnormality for each region, and transmits the results to a history storage unit 104 in the storage unit 24. The history storage unit 104 stores the received number of occurrences of abnormality for each region.

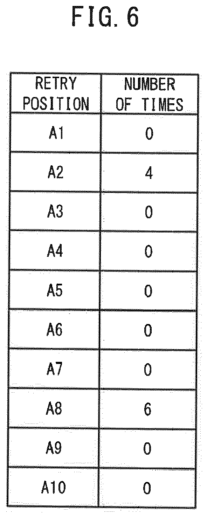

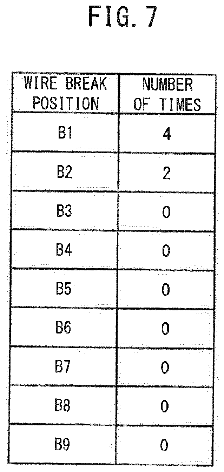

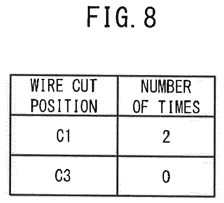

FIG. 6 is a table showing the number of times the automatic wire feeding failed in each region. FIG. 6 shows that failure of the automatic wire feeding occurred four times in the region A2, and failure of the automatic wire feeding occurred six times in the region A8. FIG. 7 is a table showing the number of times the wire electrode 12 was broken in each region. FIG. 7 shows that break of the wire electrode 12 occurred four times in the region B1 and break of the wire electrode 12 occurred twice in the region B2. FIG. 8 is a table showing the number of times the wire electrode 12 was cut in each region. FIG. 8 shows that the wire electrode 12 was cut twice in the region C1. When the wire cut position is in the region C2, no abnormality has occurred in the wire electrode 12, so this event is not counted as an abnormality. The abnormality event counting unit 96 transmits information on the number of occurrences of abnormality in each region to the history storage unit 104, and the history storage unit 104 stores the received information on the number of occurrences of abnormality in each region.

[Configuration of Storage Unit]

Before explaining the details of the priority setting unit 98 and the display control unit 100 in the processing unit 22, the storage unit 24 will be described. The storage unit 24 includes at least the operation data accumulation unit 102, the history storage unit 104 and a solution information storage unit 106.

The operation data accumulation unit 102 time-sequentially stores the detection signals of the encoders EC1, EC2 and the tension detector 32, transmitted from the machining control unit 90 as described above. Also, the operation data accumulation unit 102 time-sequentially stores the detection signals of the encoders EC1, EC2, the tension detector 32 and the flexure detector 34, transmitted from the automatic wire feeding control unit 92, as described above. The history storage unit 104 stores information on the number of occurrences of abnormality in each region concerning each abnormality location, transmitted from the abnormality event counting unit 96, as described above. The solution information storage unit 106 stores therein solution information for solving trouble in the wire running system of the wire electrode 12 for each region concerning each abnormality location.

[Details of Solution Information Storage Unit]

During the operation of the wire electrical discharge machine 10, automatic wire feeding failure, breaking and cutting of the wire electrode 12 occur at various locations depending on the tension of the wire electrode 12, the state of the workpiece W, machining conditions and others. However, if failure of automatic wire feeding or break of the wire electrode 12 frequently occurs at a particular point, or when the wire electrode 12 frequently breaks at a position away from the detection electrode 38b, it is conceivable that a trouble occurs in the running system of the wire electrode 12. The trouble in the running system of the wire electrode 12 may include, for example, clogging of the upper wire guide 52 or the lower wire guide 54, excessive tension of the wire electrode 12, insufficient supply of the dielectric working fluid during machining, etc.

The operator's manual of the wire electrical discharge machine 10 describes solution methods of identifying a trouble in the running system of the wire electrode 12 from the abnormality location of the wire electrode 12 on the running path and solving the trouble. It should be noted that the operator's manual may be of a paper medium or an electronic medium.

The solution information storage unit 106 stores information on abnormality locations of the wire electrode 12 on the wire running path in association with sections (reference pages) where the solution methods for solving trouble of the running system of the wire electrode 12 are given in the operator's manual.

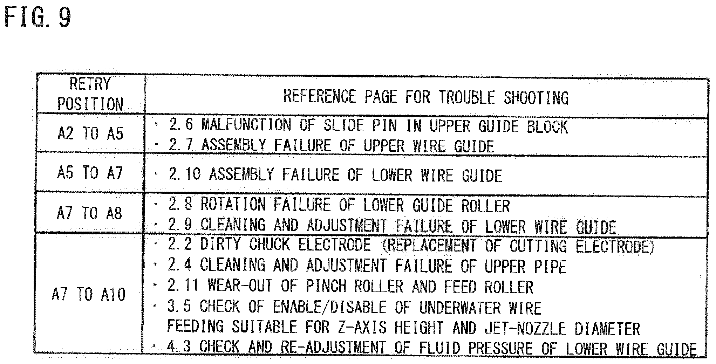

FIG. 9 is a corresponding table between retry positions and reference pages. FIG. 9 shows that, for example, when the retry position is in the region A5, the method for solving the trouble in the running system of the wire electrode 12 is given in reference pages "2.6", "2.7", "2.10" in the operator's manual.

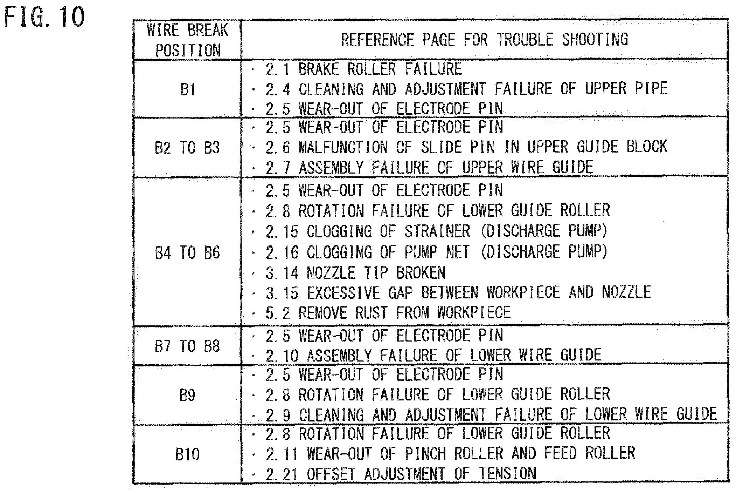

FIG. 10 is a correspondence table between wire break positions and reference pages. FIG. 10 shows that, for example, when the wire break position is in the region B3, the method of solving the trouble of the running system of the wire electrode 12 is given on reference pages "2.5", "2.6", "2.7" in the operator's manual.

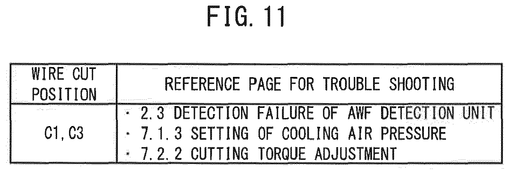

FIG. 11 is a correspondence table between wire cut positions and reference pages. FIG. 11 shows that, for example, when the wire cut position is in the region C1, the method of solving the trouble of the running system of the wire electrode 12 is given on reference pages "2.3", "7.1.3", " 7.2.2", in the operator's manual. When the wire cut position is in the region C2, it is regarded that the wire electrode 12 has been normally cut, and thus no corresponding reference pages are given.

[Details of Priority Setting Unit and Display Control Unit]

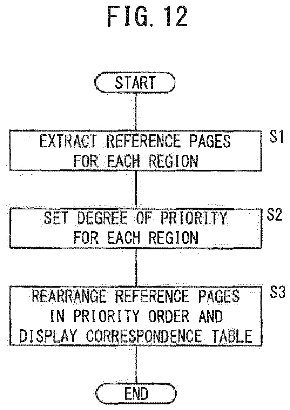

FIG. 12 is a flowchart showing the flow of processing in the priority setting unit 98 and the display control unit 100.

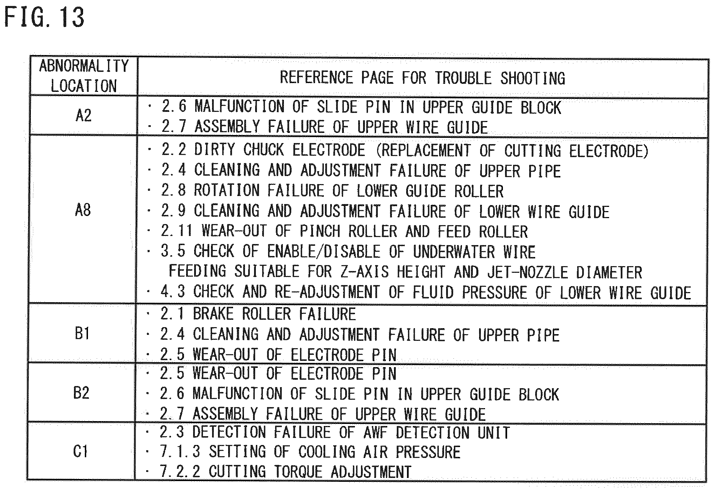

At step S1, the priority setting unit 98 extracts reference pages corresponding to the abnormality locations of the wire electrode 12 on the running path. From FIGS. 6 to 8, it can be identified that the abnormality locations are the regions A2, A8, B1, B2, C1. From FIGS. 9 to 11, reference pages corresponding to the regions A2, A8, B1, B2 and C1 are extracted. FIG. 13 is a table showing the reference pages for each of abnormality locations.

At step S2, the priority setting unit 98 sets a degree of priority on each abnormality location. Weights are set beforehand according to the type of abnormality of the wire electrode 12. The weight is set at "1" for failure of automatic wire feeding, the weight is set at "2" for break of the wire electrode 12, and the weight is set at "0.5" for cutting of the wire electrode 12.

Next, each degree of the priority is calculated by multiplying the number of occurrences of abnormality of the wire electrode 12 in each abnormality location by the weight. That is, the degree of the priority is given by the expression "degree of priority = number of occurrences of abnormality × weight". Hereinafter, "the degree of priority" will also be simply referred to as "priority", and the "number of occurrences of abnormality" will also be simply referred to as "number of abnormalities".

```
Region B1:
      8 (priority) = 4 (number of abnormalities) × 2 (weight)


Region A8:
      6 (priority) = 6 (number of abnormalities) × 1 (weight)


Region B2:
      4 (priority) = 2 (number of abnormalities) × 2 (weight)


Region A2:
      4 (priority) = 4 (number of abnormalities) × 1 (weight)


   Region C1:
       1 (priority) = 2 (number of abnormalities) × 0.5
(weight)
```

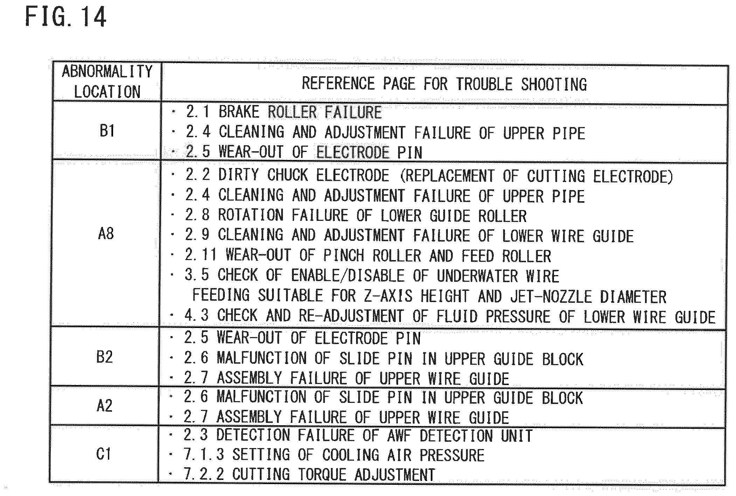

At step S3, the display control unit 100 rearranges the reference pages in order of the degrees of priority of abnormality locations, and causes the display unit 26 to display the reference pages. FIG. 14 is a correspondence table of abnormality locations rearranged in order of the degree of priority and reference pages. As shown in FIG. 14, the reference pages corresponding to the region B1, which is the abnormality location with the highest degree of priority, is displayed at the uppermost. Thus, it is possible for the operator to smoothly and quickly find the method for solving the higher priority trouble.

Display of the information of the reference pages in the operator's manual on the display unit 26 may be performed at optionally-selected time points, for example, at regular time intervals, or when the number of occurrences of abnormality of the wire electrode 12 on the running path exceeds a predetermined number. Further, it is possible to provide a configuration in which when the operator performs a certain operation such as selecting a reference page displayed on the display unit 26 by use of the input unit 20, content of a method for solving the failure, described on the selected reference page is displayed.

[Operation and Effect]

In the wire electrical discharge machine 10, many types of troubles occur in the running system of the wire electrode 12, and hence there are many kinds of solutions for solving the troubles. Accordingly, the operator's manual contains large amount of information for trouble shooting, so that it has taken a long time for the operator to find an appropriate solution method.

To deal with this, in the present embodiment, the controller 18 of the wire electrical discharge machine 10 for controlling the display unit 26 so as to display solution information for solving a trouble in the running system of the wire electrode 12, includes: the abnormality location calculating unit 94 configured to calculate an abnormality location when an abnormality of the wire electrode 12 has occurred on the wire running path in the wire electrical discharge machine 10 in operation; the history storage unit 104 configured to store a history of the abnormality location; the solution information storage unit 106 configured to store abnormality locations and solution information in association with each other; the priority setting unit 98 configured to set degrees of priority respectively to the abnormality locations according to the history of each of the abnormality locations; and a display control unit 100 configured to cause the display unit 26 to display the solution information corresponding to the abnormality locations with the degrees of the priority being given. This configuration enables the operator to refer to a reference page corresponding to a higher priority abnormality location, and thereby readily find an appropriate solution method to solve the trouble.

Furthermore, in the present embodiment, the controller 18 further includes the abnormality event counting unit 96 configured to divide the running path into multiple regions and count the number of occurrences of abnormality of the wire electrode 12 for each of the regions to which the abnormality locations belong. The history storage unit 104 stores the number of occurrences of abnormality for each region, and the priority setting unit 98 sets degrees of priority respectively for the regions including the abnormality locations. Thereby, the reference pages of the operator's manual corresponding to the location where abnormality frequently occurs can be preferentially displayed on the display unit 26.

Further, in the present embodiment, the time when the abnormality of the wire electrode 12 has occurred is defined as a time when automatic wire feeding of the wire electrode 12 has failed, a time when the wire electrode 12 has broken during machining of a workpiece W, or a time when the wire electrode 12 has been cut at a position other than a predetermined position. Thus, it is possible to exactly determine abnormality of the wire electrode 12 on the wire running path.

[Second Embodiment]

In the second embodiment, the degree of priority set for each abnormality location by the priority setting unit 98 is compensated according to the maintenance history of the wire electrical discharge machine 10.

[Details of History Storage Unit]

The history storage unit 104 stores a history (maintenance history) in which the wire electrical discharge machine 10 was maintained. More specifically, the history storage unit 104 stores the maintenance interval (the number of times of maintenance) for each maintenance item of the wire electrical discharge machine 10 and the remaining time (the remaining number of times) until the next maintenance.

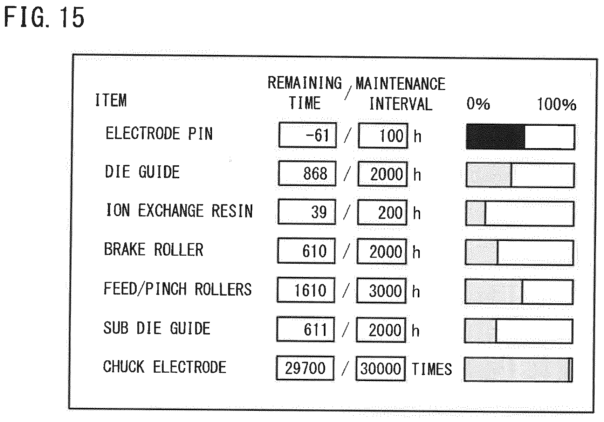

FIG. 15 is a table showing the maintenance interval and the remaining time for each maintenance item of the wire electrical discharge machine 10. FIG. 15 shows, for example, that the maintenance interval of the electrode pins is 100 hours and the remaining time is -61 hours. That is, the electrode pins are used exceeding the maintenance interval by 61 hours.

[Details of Priority Setting Unit]

The priority setting unit 98 compensates the degree of priority set for each abnormality location according to the maintenance history. More specifically, the degree of priority for the abnormality location whose reference pages contain a maintenance item used exceeding the maintenance interval (the number of times for maintenance) is doubled. It is understood from FIG. 14 that the regions B1 and B2 are the abnormality locations whose reference pages contain electrode pins that have been used exceeding the maintenance interval so that the degrees of priority for the regions B1 and B2 are doubled.

```
Region B1:
    16(priority) = 4 (number of abnormalities) × 2 (weight)
× 2

Region B2:
    8(priority) = 2 (number of abnormalities) × 2 (weight)
× 2

Region A8:
    6(priority) = 6 (number of abnormalities) × 1 (weight)

Region A2:
    4(priority) = 4 (number of abnormalities) × 1 (weight)

    Region C1:
        1(priority) = 2 (number of abnormalities) × 0.5
    (weight)
```

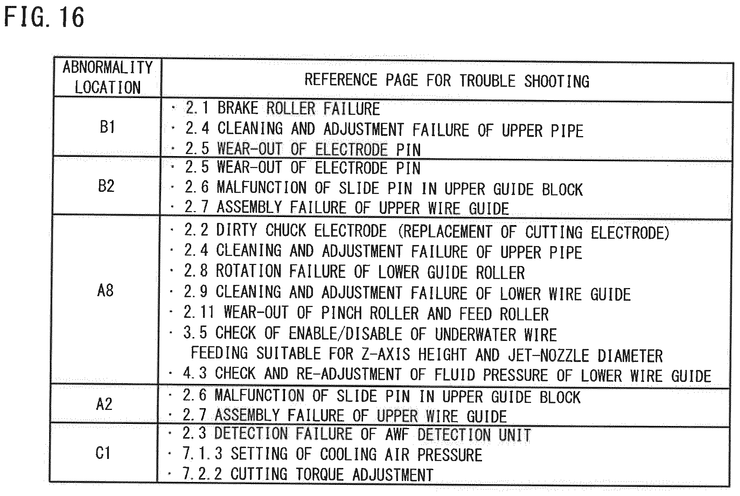

FIG. 16 is a correspondence table between abnormality locations rearranged in order of the compensated degrees of priority and reference pages. As shown in FIG. 16, the reference pages for the regions B1 and B2 having the item, i.e., electrode pins used exceeding the maintenance interval, are displayed higher on the list.

[Operation and Effect]

In the present embodiment, the history storage unit 104 stores maintenance history of the wire electrical discharge machine 10, and the priority setting unit 98 compensates the degree of priority set for each of the abnormality locations according to the maintenance history. Maintenance items used exceeding the maintenance interval are highly likely to be faulty. This configuration enables the operator to readily find a solution to the trouble to be fixed up preferentially.

[Third Embodiment]

In the third embodiment, the display control unit 100 is configured to cause the display unit 26 to display reference pages for each abnormality location in such a manner as to place reference pages that were referred to more frequently by the operator above the other reference pages.

[Details of History Storage]

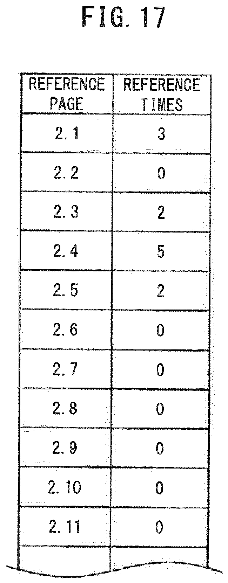

The history storage unit 104 stores the number of times each reference page of the operator's manual of the wire electrical discharge machine 10 was referred to by the operator. FIG. 17 is a table showing the reference pages in the operator's manual and the number of times the reference pages were referred to by the operator. For example, in FIG. 17, the reference page "2.1", the reference page "2.3", the reference page "2.4" and the reference page "2.5" were referred to by the operator, three times, twice, five times and twice, respectively.

[Details of Display Control Unit]

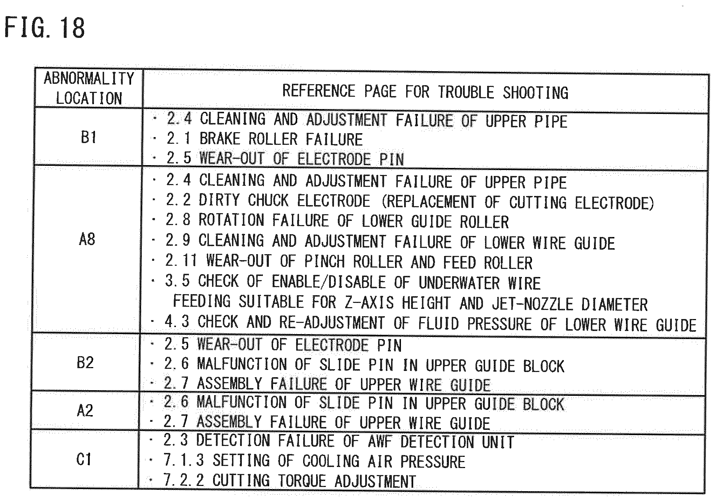

The display control unit 100 controls display of reference pages for each abnormality location in such a manner as to place reference pages that were referred to more frequently by the operator above the other reference pages. FIG. 18 is a correspondence table between the abnormality locations and the reference pages in which among the reference pages for each abnormality location, reference pages that were referred to more frequently by the operator are displayed above those that were referred to less frequently. As shown in FIG. 18, for example, the reference pages corresponding to the region B1, that is, the reference page "2.4" referred to 5 times, the reference page "2.1" referred to three times, the reference page "2.5" referred to twice, are displayed in the order mentioned.

[Operation and Effect]

In the present embodiment, there are multiple reference pages corresponding to each abnormality location. The history storage unit 104 stores, for each piece of solution information, the number of times each reference page was referred to by the operator. The display control unit 100 causes the display unit 26 to display the multiple reference pages corresponding to each abnormality location in such a manner as to place reference pages that were referred to more frequently among the multiple reference pages, above those that were referred to less frequently. Troubles that happened in the past are considered to be likely to occur once again. In the present embodiment, the reference pages that were referred to more frequently by the operator in solving troubles in the past are displayed higher in rankings on the display unit 26. Thus, it is possible for the operator to readily find a solution to the trouble to be preferentially fixed up.

[Fourth Embodiment]

In the fourth embodiment, the display control unit 100 causes the display unit 26 to display reference pages for each abnormality location in such a manner as to place reference pages which the operators have given higher evaluation scores, above the other reference pages.

[Details of History Storage Unit]

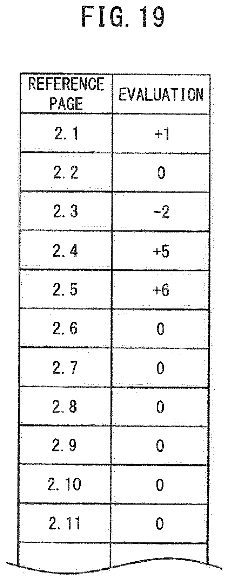

The history storage unit 104 stores the total of the evaluation scores given by the operators, for each reference page. The operators input the evaluation scores for the reference pages through the input unit 20. When the information on a reference page is highly useful, +3 points is given. When the information on a reference page is useful, +1 point is given. When the information on a reference page is not useful, -1 point is given. FIG. 19 is a table showing reference pages in the operator's manual and the totals of the evaluation scores for the reference pages given by the operators. For example, in FIG. 19, the total of evaluation scores of the reference page "2.1" is +1 point, the total of evaluation scores of the reference page "2.3" is -2 points, the total of evaluation scores of the reference page "2.4" is +5 points, and the total of evaluation scores of the reference page "2.5" is +6 points.

[Details of Display Control Unit]

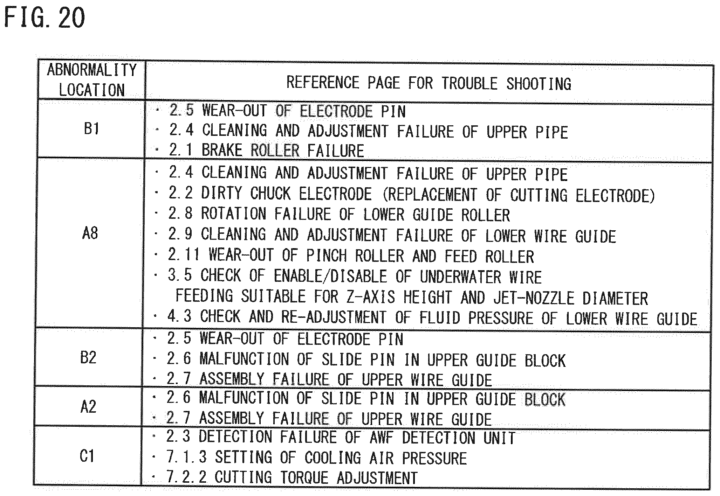

Among the reference pages for each abnormality location, the display control unit 100 displays the reference pages having higher evaluation scores given by the operators, above the other reference pages. FIG. 20 is a correspondence table between abnormality locations and reference pages, in which reference pages highly evaluated by the operators among the reference pages for each abnormality location are displayed above the other reference pages. As shown in FIG. 20, for example, concerning the reference pages corresponding to the region B1, the reference page "2.5" given with a total score of +6 points, the reference page "2.4" given with +5 points, and the reference page "2.1" given with +1 point are displayed in this order.

[Operation and Effect]

In the present embodiment, there are multiple reference pages corresponding to each abnormality location. The history storage unit 104 stores, for each piece of solution information, the evaluation score of each reference page given by the operators. The display control unit 100 causes the display unit 26 to display the multiple reference pages for each abnormality location in such a manner as to place reference pages having higher evaluation scores above reference pages with lower evaluation scores. Solution methods on the reference pages that were useful to solve troubles that occurred in the past are likely to be useful in solving the trouble occurring this time. In the present embodiment, the reference pages that were highly evaluated by the operators are displayed higher in rankings on the display unit 26, and thus it is possible for the operator to readily find a solution to the trouble to be fixed up.

[Fifth Embodiment]

In the fifth embodiment, the display control unit 100 causes the display unit 26 to display a second reference page viewed by the operator after referring to a first reference page.

[Details of History Storage Unit]

The history storage unit 104 stores the history of operator's reference to a second reference page after reference to a first reference page in the operator's manual.

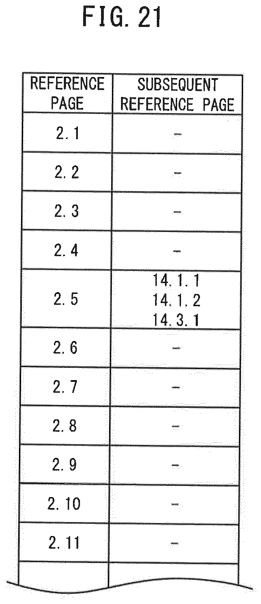

FIG. 21 is a table showing first reference pages in the operator's manual and second reference pages viewed by the operator after reference to the first reference page. For example, FIG. 21 shows that the operator viewed the reference pages "14.1.1", "14.1.2", "14.3.1" after referring to the reference page "2.5".

[Details of Display Control Unit]

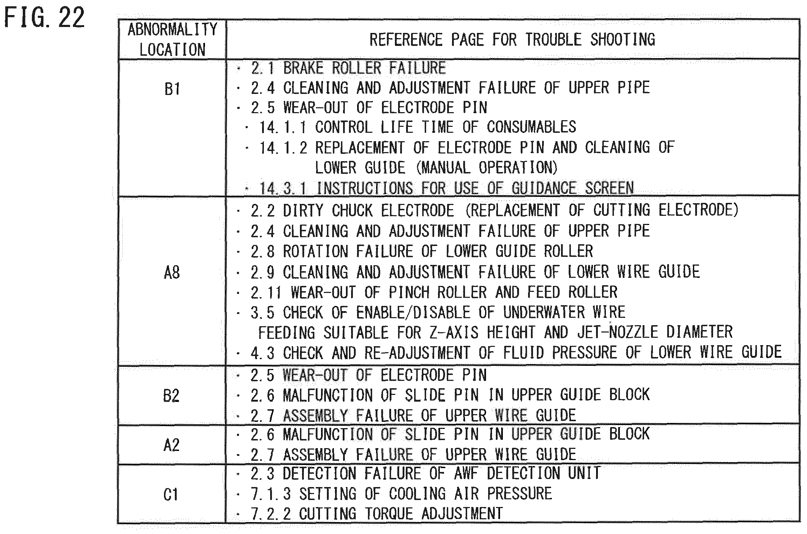

FIG. 22 is a correspondence table between abnormality locations and reference pages, in which second reference pages that have been referred to by the operator after referring to first reference pages are displayed together with the first reference pages. As shown in FIG. 22, reference pages "14.1.1", "14.1.2" and "14.3.1" are displayed together with the reference page "2.5".

[Operation and Effect]

In the present embodiment, the history storage unit 104 stores the history of second reference pages viewed by the operator after referring to a first reference page. The display control unit 100 causes the display unit 26 to display the second reference pages together with the first reference page. Thus, a reference page and other reference pages considered to be strongly related to the reference page are displayed together, so that the operator can readily find a solution for solving the trouble.

**Claims**

1. A controller (18) for a wire electrical discharge machine (10), configured to control a display unit (26) so as to display solution information for solving a trouble in a running system of a wire electrode (12), comprising:

   an abnormality location calculating unit (94) configured to calculate an abnormality location at a time when an abnormality of the wire electrode (12) has occurred on a wire running path in the wire electrical discharge machine (10) in operation;
   a history storage unit (104) configured to store a history of the abnormality location;
   a solution information storage unit (106) configured to store abnormality locations and the solution information in association with each other;
   a priority setting unit (98) configured to set a degree of priority for each of the abnormality locations according to the history of the abnormality location; and
   a display control unit (100) configured to cause the display unit (26) to display the solution information corresponding to each of the abnormality locations by taking the degree of priority into account.

2. The controller (18) for the wire electrical discharge machine (10) according to claim 1, further comprising an abnormality event counting unit (96) configured to divide the wire running path into multiple regions, and count a number of occurrences of abnormality of the wire electrode (12) for each of the regions to which the abnormality locations belong, wherein:

   the history storage unit (104) is configured to store the number of occurrences of the abnormality for each of the regions; and
   the priority setting unit (98) is configured to set the degree of priority for each of the regions including the abnormality locations.

3. The controller (18) for the wire electrical discharge machine (10) according to claim 1 or 2, wherein the time when the abnormality of the wire electrode (12) has occurred is a time when automatic wire feeding of the wire electrode (12) has failed.

4. The controller (18) for the wire electrical discharge machine (10) according to any one of claims 1 to 3, wherein the time when the abnormality of the wire electrode (12) has occurred is a time when the wire electrode (12) has broken during machining of a workpiece.

5. The controller (18) for the wire electrical discharge machine (10) according to any one of claims 1 to 4, wherein the time when the abnormality of the wire electrode (12) has occurred is a time when the wire electrode (12) has been cut at a position other than a predetermined position.

6. The controller (18) for the wire electrical discharge machine (10) according to any one of claims 1 to 5, wherein:

the history storage unit (104) is configured to store maintenance history of the wire electrical discharge machine (10); and
the priority setting unit (98) is configured to compensate the degree of priority set for each of the abnormality locations according to the maintenance history.

7. The controller (18) for the wire electrical discharge machine (10) according to any one of claims 1 to 6, wherein:

the solution information for each of the abnormality locations includes multiple pieces of solution information;
the history storage unit (104) is configured to store, for each of the pieces of solution information, a number of times the solution information was referred to by an operator; and
the display control unit (100) is configured to cause the display unit (26) to display the multiple pieces of solution information for each of the abnormality locations in a manner so as to list pieces of solution information that were referred to more frequently, among the multiple pieces of solution information, above pieces of solution information that were referred to less frequently.

8. The controller (18) for the wire electrical discharge machine (10) according to any one of claims 1 to 6, wherein:

the solution information for each of the abnormality locations includes multiple pieces of solution information;
the history storage unit (104) is configured to store, for each of the pieces of solution information, an evaluation score that has been given to the solution information by an operator; and
the display control unit (100) is configured to cause the display unit (26) to display the multiple pieces of solution information for each of the abnormality locations in a manner so as to list pieces of solution information that have been given with higher evaluation scores, among the multiple pieces of solution information, above pieces of solution information that have been given with lower evaluation scores.

9. The controller (18) for the wire electrical discharge machine (10) according to any one of claims 1 to 8, wherein:

the history storage unit (104) is configured to store a history of a second piece of solution information that was referred to by an operator after referring to a first piece of solution information; and
the display control unit (100) is configured to cause the display unit (26) to display the second piece of solution information together with the first piece of solution information.

# FIG. 1

# FIG. 2

18

```
                    ┌─────────────────────────┐
   ┌─────────┐      │   PROCESSING UNIT        │──22        ┌─────────┐
20 │ INPUT   │      │  ┌──────────────────┐    │            26│ DISPLAY │
   │ UNIT    │─────▶│  │   MACHINING      │─90 │───────────▶ │ UNIT    │
   └─────────┘      │  │  CONTROL UNIT    │    │            └─────────┘
                    │  └──────────────────┘    │
                    │  ┌──────────────────┐    │
                    │  │ AUTOMATIC WIRE   │─92 │
                    │  │   FEEDING        │    │
                    │  │  CONTROL UNIT    │    │
                    │  └──────────────────┘    │
                    │  ┌──────────────────┐    │
                    │  │  ABNORMALITY     │    │
                    │  │   LOCATION       │─94 │
                    │  │ CALCULATING UNIT │    │
                    │  └──────────────────┘    │
                    │  ┌──────────────────┐    │
                    │  │ ABNORMALITY EVENT│─96 │
                    │  │  COUNTING UNIT   │    │
                    │  └──────────────────┘    │
                    │  ┌──────────────────┐    │
                    │  │    PRIORITY      │─98 │
                    │  │  SETTING UNIT    │    │
                    │  └──────────────────┘    │
                    │  ┌──────────────────┐    │
                    │  │    DISPLAY       │─100│
                    │  │  CONTROL UNIT    │    │
                    │  └──────────────────┘    │
                    └─────────────────────────┘
                               ▲
                               │
                               ▼
                    ┌─────────────────────────┐
                    │    STORAGE UNIT          │──24
                    │  ┌──────────────────┐    │
                    │  │ OPERATION DATA   │─102│
                    │  │ ACCUMULATION UNIT│    │
                    │  └──────────────────┘    │
                    │  ┌──────────────────┐    │
                    │  │    HISTORY       │─104│
                    │  │  STORAGE UNIT    │    │
                    │  └──────────────────┘    │
                    │  ┌──────────────────┐    │
                    │  │   SOLUTION       │─106│
                    │  │  INFORMATION     │    │
                    │  │  STORAGE UNIT    │    │
                    │  └──────────────────┘    │
                    └─────────────────────────┘
```

FIG. 3

# FIG. 4

52

76

76a

Wh (Wg)

W

86a

86

54

56

B1

B2

B3

B4

B5

B6

B7

B8

B9

# FIG. 5

FIG. 6

| RETRY POSITION | NUMBER OF TIMES |
|:---:|:---:|
| A1 | 0 |
| A2 | 4 |
| A3 | 0 |
| A4 | 0 |
| A5 | 0 |
| A6 | 0 |
| A7 | 0 |
| A8 | 6 |
| A9 | 0 |
| A10 | 0 |

# FIG. 7

| WIRE BREAK POSITION | NUMBER OF TIMES |
|---|---|
| B1 | 4 |
| B2 | 2 |
| B3 | 0 |
| B4 | 0 |
| B5 | 0 |
| B6 | 0 |
| B7 | 0 |
| B8 | 0 |
| B9 | 0 |

FIG. 8

| WIRE CUT POSITION | NUMBER OF TIMES |
|---|---|
| C1 | 2 |
| C3 | 0 |

# FIG. 9

| RETRY POSITION | REFERENCE PAGE FOR TROUBLE SHOOTING |
|---|---|
| A2 TO A5 | · 2.6 MALFUNCTION OF SLIDE PIN IN UPPER GUIDE BLOCK<br>· 2.7 ASSEMBLY FAILURE OF UPPER WIRE GUIDE |
| A5 TO A7 | · 2.10 ASSEMBLY FAILURE OF LOWER WIRE GUIDE |
| A7 TO A8 | · 2.8 ROTATION FAILURE OF LOWER GUIDE ROLLER<br>· 2.9 CLEANING AND ADJUSTMENT FAILURE OF LOWER WIRE GUIDE |
| A7 TO A10 | · 2.2 DIRTY CHUCK ELECTRODE (REPLACEMENT OF CUTTING ELECTRODE)<br>· 2.4 CLEANING AND ADJUSTMENT FAILURE OF UPPER PIPE<br>· 2.11 WEAR-OUT OF PINCH ROLLER AND FEED ROLLER<br>· 3.5 CHECK OF ENABLE/DISABLE OF UNDERWATER WIRE FEEDING SUITABLE FOR Z-AXIS HEIGHT AND JET-NOZZLE DIAMETER<br>· 4.3 CHECK AND RE-ADJUSTMENT OF FLUID PRESSURE OF LOWER WIRE GUIDE |

EP 3 354 391 A1

**FIG. 10**

| WIRE BREAK POSITION | REFERENCE PAGE FOR TROUBLE SHOOTING |
|---|---|
| B1 | · 2.1 BRAKE ROLLER FAILURE<br>· 2.4 CLEANING AND ADJUSTMENT FAILURE OF UPPER PIPE<br>· 2.5 WEAR-OUT OF ELECTRODE PIN |
| B2 TO B3 | · 2.5 WEAR-OUT OF ELECTRODE PIN<br>· 2.6 MALFUNCTION OF SLIDE PIN IN UPPER GUIDE BLOCK<br>· 2.7 ASSEMBLY FAILURE OF UPPER WIRE GUIDE |
| B4 TO B6 | · 2.5 WEAR-OUT OF ELECTRODE PIN<br>· 2.8 ROTATION FAILURE OF LOWER GUIDE ROLLER<br>· 2.15 CLOGGING OF STRAINER (DISCHARGE PUMP)<br>· 2.16 CLOGGING OF PUMP NET (DISCHARGE PUMP)<br>· 3.14 NOZZLE TIP BROKEN<br>· 3.15 EXCESSIVE GAP BETWEEN WORKPIECE AND NOZZLE<br>· 5.2 REMOVE RUST FROM WORKPIECE |
| B7 TO B8 | · 2.5 WEAR-OUT OF ELECTRODE PIN<br>· 2.10 ASSEMBLY FAILURE OF LOWER WIRE GUIDE |
| B9 | · 2.5 WEAR-OUT OF ELECTRODE PIN<br>· 2.8 ROTATION FAILURE OF LOWER GUIDE ROLLER<br>· 2.9 CLEANING AND ADJUSTMENT FAILURE OF LOWER WIRE GUIDE |
| B10 | · 2.8 ROTATION FAILURE OF LOWER GUIDE ROLLER<br>· 2.11 WEAR-OUT OF PINCH ROLLER AND FEED ROLLER<br>· 2.21 OFFSET ADJUSTMENT OF TENSION |

FIG. 11

| WIRE CUT POSITION | REFERENCE PAGE FOR TROUBLE SHOOTING |
|---|---|
| C1, C3 | · 2.3 DETECTION FAILURE OF AWF DETECTION UNIT<br>· 7.1.3 SETTING OF COOLING AIR PRESSURE<br>· 7.2.2 CUTTING TORQUE ADJUSTMENT |

# FIG. 12

```
        ( START )
            |
  ┌─────────────────────┐  S1
  │ EXTRACT REFERENCE PAGES │
  │    FOR EACH REGION      │
  └─────────────────────┘
            |
  ┌─────────────────────┐  S2
  │  SET DEGREE OF PRIORITY │
  │     FOR EACH REGION     │
  └─────────────────────┘
            |
  ┌─────────────────────┐  S3
  │ REARRANGE REFERENCE PAGES │
  │    IN PRIORITY ORDER AND  │
  │ DISPLAY CORRESPONDENCE TABLE │
  └─────────────────────┘
            |
        (  END  )
```

# FIG. 13

| ABNORMALITY LOCATION | REFERENCE PAGE FOR TROUBLE SHOOTING |
|---|---|
| A2 | · 2.6 MALFUNCTION OF SLIDE PIN IN UPPER GUIDE BLOCK<br>· 2.7 ASSEMBLY FAILURE OF UPPER WIRE GUIDE |
| A8 | · 2.2 DIRTY CHUCK ELECTRODE (REPLACEMENT OF CUTTING ELECTRODE)<br>· 2.4 CLEANING AND ADJUSTMENT FAILURE OF UPPER PIPE<br>· 2.8 ROTATION FAILURE OF LOWER GUIDE ROLLER<br>· 2.9 CLEANING AND ADJUSTMENT FAILURE OF LOWER WIRE GUIDE<br>· 2.11 WEAR-OUT OF PINCH ROLLER AND FEED ROLLER<br>· 3.5 CHECK OF ENABLE/DISABLE OF UNDERWATER WIRE<br>    FEEDING SUITABLE FOR Z-AXIS HEIGHT AND JET-NOZZLE DIAMETER<br>· 4.3 CHECK AND RE-ADJUSTMENT OF FLUID PRESSURE OF LOWER WIRE GUIDE |
| B1 | · 2.1 BRAKE ROLLER FAILURE<br>· 2.4 CLEANING AND ADJUSTMENT FAILURE OF UPPER PIPE<br>· 2.5 WEAR-OUT OF ELECTRODE PIN |
| B2 | · 2.5 WEAR-OUT OF ELECTRODE PIN<br>· 2.6 MALFUNCTION OF SLIDE PIN IN UPPER GUIDE BLOCK<br>· 2.7 ASSEMBLY FAILURE OF UPPER WIRE GUIDE |
| C1 | · 2.3 DETECTION FAILURE OF AWF DETECTION UNIT<br>· 7.1.3 SETTING OF COOLING AIR PRESSURE<br>· 7.2.2 CUTTING TORQUE ADJUSTMENT |

EP 3 354 391 A1

# FIG. 14

| ABNORMALITY LOCATION | REFERENCE PAGE FOR TROUBLE SHOOTING |
|---|---|
| B1 | · 2.1 BRAKE ROLLER FAILURE<br>· 2.4 CLEANING AND ADJUSTMENT FAILURE OF UPPER PIPE<br>· 2.5 WEAR-OUT OF ELECTRODE PIN |
| A8 | · 2.2 DIRTY CHUCK ELECTRODE (REPLACEMENT OF CUTTING ELECTRODE)<br>· 2.4 CLEANING AND ADJUSTMENT FAILURE OF UPPER PIPE<br>· 2.8 ROTATION FAILURE OF LOWER GUIDE ROLLER<br>· 2.9 CLEANING AND ADJUSTMENT FAILURE OF LOWER WIRE GUIDE<br>· 2.11 WEAR-OUT OF PINCH ROLLER AND FEED ROLLER<br>· 3.5 CHECK OF ENABLE/DISABLE OF UNDERWATER WIRE<br>    FEEDING SUITABLE FOR Z-AXIS HEIGHT AND JET-NOZZLE DIAMETER<br>· 4.3 CHECK AND RE-ADJUSTMENT OF FLUID PRESSURE OF LOWER WIRE GUIDE |
| B2 | · 2.5 WEAR-OUT OF ELECTRODE PIN<br>· 2.6 MALFUNCTION OF SLIDE PIN IN UPPER GUIDE BLOCK<br>· 2.7 ASSEMBLY FAILURE OF UPPER WIRE GUIDE |
| A2 | · 2.6 MALFUNCTION OF SLIDE PIN IN UPPER GUIDE BLOCK<br>· 2.7 ASSEMBLY FAILURE OF UPPER WIRE GUIDE |
| C1 | · 2.3 DETECTION FAILURE OF AWF DETECTION UNIT<br>· 7.1.3 SETTING OF COOLING AIR PRESSURE<br>· 7.2.2 CUTTING TORQUE ADJUSTMENT |

FIG. 15

| ITEM | REMAINING TIME | / | MAINTENANCE INTERVAL | | 0%      100% |
|---|---|---|---|---|---|
| ELECTRODE PIN | -61 | / | 100 | h | |
| DIE GUIDE | 868 | / | 2000 | h | |
| ION EXCHANGE RESIN | 39 | / | 200 | h | |
| BRAKE ROLLER | 610 | / | 2000 | h | |
| FEED/PINCH ROLLERS | 1610 | / | 3000 | h | |
| SUB DIE GUIDE | 611 | / | 2000 | h | |
| CHUCK ELECTRODE | 29700 | / | 30000 | TIMES | |

# FIG. 16

| ABNORMALITY LOCATION | REFERENCE PAGE FOR TROUBLE SHOOTING |
|---|---|
| B1 | · 2.1 BRAKE ROLLER FAILURE<br>· 2.4 CLEANING AND ADJUSTMENT FAILURE OF UPPER PIPE<br>· 2.5 WEAR-OUT OF ELECTRODE PIN |
| B2 | · 2.5 WEAR-OUT OF ELECTRODE PIN<br>· 2.6 MALFUNCTION OF SLIDE PIN IN UPPER GUIDE BLOCK<br>· 2.7 ASSEMBLY FAILURE OF UPPER WIRE GUIDE |
| A8 | · 2.2 DIRTY CHUCK ELECTRODE (REPLACEMENT OF CUTTING ELECTRODE)<br>· 2.4 CLEANING AND ADJUSTMENT FAILURE OF UPPER PIPE<br>· 2.8 ROTATION FAILURE OF LOWER GUIDE ROLLER<br>· 2.9 CLEANING AND ADJUSTMENT FAILURE OF LOWER WIRE GUIDE<br>· 2.11 WEAR-OUT OF PINCH ROLLER AND FEED ROLLER<br>· 3.5 CHECK OF ENABLE/DISABLE OF UNDERWATER WIRE<br>   FEEDING SUITABLE FOR Z-AXIS HEIGHT AND JET-NOZZLE DIAMETER<br>· 4.3 CHECK AND RE-ADJUSTMENT OF FLUID PRESSURE OF LOWER WIRE GUIDE |
| A2 | · 2.6 MALFUNCTION OF SLIDE PIN IN UPPER GUIDE BLOCK<br>· 2.7 ASSEMBLY FAILURE OF UPPER WIRE GUIDE |
| C1 | · 2.3 DETECTION FAILURE OF AWF DETECTION UNIT<br>· 7.1.3 SETTING OF COOLING AIR PRESSURE<br>· 7.2.2 CUTTING TORQUE ADJUSTMENT |

EP 3 354 391 A1

FIG. 17

| REFERENCE PAGE | REFERENCE TIMES |
|---|---|
| 2.1 | 3 |
| 2.2 | 0 |
| 2.3 | 2 |
| 2.4 | 5 |
| 2.5 | 2 |
| 2.6 | 0 |
| 2.7 | 0 |
| 2.8 | 0 |
| 2.9 | 0 |
| 2.10 | 0 |
| 2.11 | 0 |

# FIG. 18

| ABNORMALITY LOCATION | REFERENCE PAGE FOR TROUBLE SHOOTING |
|---|---|
| B1 | · 2.4 CLEANING AND ADJUSTMENT FAILURE OF UPPER PIPE<br>· 2.1 BRAKE ROLLER FAILURE<br>· 2.5 WEAR-OUT OF ELECTRODE PIN |
| A8 | · 2.4 CLEANING AND ADJUSTMENT FAILURE OF UPPER PIPE<br>· 2.2 DIRTY CHUCK ELECTRODE (REPLACEMENT OF CUTTING ELECTRODE)<br>· 2.8 ROTATION FAILURE OF LOWER GUIDE ROLLER<br>· 2.9 CLEANING AND ADJUSTMENT FAILURE OF LOWER WIRE GUIDE<br>· 2.11 WEAR-OUT OF PINCH ROLLER AND FEED ROLLER<br>· 3.5 CHECK OF ENABLE/DISABLE OF UNDERWATER WIRE<br>　　FEEDING SUITABLE FOR Z-AXIS HEIGHT AND JET-NOZZLE DIAMETER<br>· 4.3 CHECK AND RE-ADJUSTMENT OF FLUID PRESSURE OF LOWER WIRE GUIDE |
| B2 | · 2.5 WEAR-OUT OF ELECTRODE PIN<br>· 2.6 MALFUNCTION OF SLIDE PIN IN UPPER GUIDE BLOCK<br>· 2.7 ASSEMBLY FAILURE OF UPPER WIRE GUIDE |
| A2 | · 2.6 MALFUNCTION OF SLIDE PIN IN UPPER GUIDE BLOCK<br>· 2.7 ASSEMBLY FAILURE OF UPPER WIRE GUIDE |
| C1 | · 2.3 DETECTION FAILURE OF AWF DETECTION UNIT<br>· 7.1.3 SETTING OF COOLING AIR PRESSURE<br>· 7.2.2 CUTTING TORQUE ADJUSTMENT |

FIG. 19

| REFERENCE PAGE | EVALUATION |
|---|---|
| 2. 1 | +1 |
| 2. 2 | 0 |
| 2. 3 | -2 |
| 2. 4 | +5 |
| 2. 5 | +6 |
| 2. 6 | 0 |
| 2. 7 | 0 |
| 2. 8 | 0 |
| 2. 9 | 0 |
| 2. 10 | 0 |
| 2. 11 | 0 |

# FIG. 20

| ABNORMALITY LOCATION | REFERENCE PAGE FOR TROUBLE SHOOTING |
|---|---|
| B1 | · 2.5 WEAR-OUT OF ELECTRODE PIN<br>· 2.4 CLEANING AND ADJUSTMENT FAILURE OF UPPER PIPE<br>· 2.1 BRAKE ROLLER FAILURE |
| A8 | · 2.4 CLEANING AND ADJUSTMENT FAILURE OF UPPER PIPE<br>· 2.2 DIRTY CHUCK ELECTRODE (REPLACEMENT OF CUTTING ELECTRODE)<br>· 2.8 ROTATION FAILURE OF LOWER GUIDE ROLLER<br>· 2.9 CLEANING AND ADJUSTMENT FAILURE OF LOWER WIRE GUIDE<br>· 2.11 WEAR-OUT OF PINCH ROLLER AND FEED ROLLER<br>· 3.5 CHECK OF ENABLE/DISABLE OF UNDERWATER WIRE<br>    FEEDING SUITABLE FOR Z-AXIS HEIGHT AND JET-NOZZLE DIAMETER<br>· 4.3 CHECK AND RE-ADJUSTMENT OF FLUID PRESSURE OF LOWER WIRE GUIDE |
| B2 | · 2.5 WEAR-OUT OF ELECTRODE PIN<br>· 2.6 MALFUNCTION OF SLIDE PIN IN UPPER GUIDE BLOCK<br>· 2.7 ASSEMBLY FAILURE OF UPPER WIRE GUIDE |
| A2 | · 2.6 MALFUNCTION OF SLIDE PIN IN UPPER GUIDE BLOCK<br>· 2.7 ASSEMBLY FAILURE OF UPPER WIRE GUIDE |
| C1 | · 2.3 DETECTION FAILURE OF AWF DETECTION UNIT<br>· 7.1.3 SETTING OF COOLING AIR PRESSURE<br>· 7.2.2 CUTTING TORQUE ADJUSTMENT |

# FIG. 21

| REFERENCE PAGE | SUBSEQUENT REFERENCE PAGE |
|----------------|---------------------------|
| 2. 1 | – |
| 2. 2 | – |
| 2. 3 | – |
| 2. 4 | – |
| 2. 5 | 14. 1. 1<br>14. 1. 2<br>14. 3. 1 |
| 2. 6 | – |
| 2. 7 | – |
| 2. 8 | – |
| 2. 9 | – |
| 2. 10 | – |
| 2. 11 | – |
|  |  |

**FIG. 22**

| ABNORMALITY LOCATION | REFERENCE PAGE FOR TROUBLE SHOOTING |
|---|---|
| B1 | · 2.1 BRAKE ROLLER FAILURE<br>· 2.4 CLEANING AND ADJUSTMENT FAILURE OF UPPER PIPE<br>· 2.5 WEAR-OUT OF ELECTRODE PIN<br> · 14.1.1 CONTROL LIFE TIME OF CONSUMABLES<br> · 14.1.2 REPLACEMENT OF ELECTRODE PIN AND CLEANING OF<br>          LOWER GUIDE (MANUAL OPERATION)<br> · 14.3.1 INSTRUCTIONS FOR USE OF GUIDANCE SCREEN |
| A8 | · 2.2 DIRTY CHUCK ELECTRODE (REPLACEMENT OF CUTTING ELECTRODE)<br>· 2.4 CLEANING AND ADJUSTMENT FAILURE OF UPPER PIPE<br>· 2.8 ROTATION FAILURE OF LOWER GUIDE ROLLER<br>· 2.9 CLEANING AND ADJUSTMENT FAILURE OF LOWER WIRE GUIDE<br>· 2.11 WEAR-OUT OF PINCH ROLLER AND FEED ROLLER<br>· 3.5 CHECK OF ENABLE/DISABLE OF UNDERWATER WIRE<br>     FEEDING SUITABLE FOR Z-AXIS HEIGHT AND JET-NOZZLE DIAMETER<br>· 4.3 CHECK AND RE-ADJUSTMENT OF FLUID PRESSURE OF LOWER WIRE GUIDE |
| B2 | · 2.5 WEAR-OUT OF ELECTRODE PIN<br>· 2.6 MALFUNCTION OF SLIDE PIN IN UPPER GUIDE BLOCK<br>· 2.7 ASSEMBLY FAILURE OF UPPER WIRE GUIDE |
| A2 | · 2.6 MALFUNCTION OF SLIDE PIN IN UPPER GUIDE BLOCK<br>· 2.7 ASSEMBLY FAILURE OF UPPER WIRE GUIDE |
| C1 | · 2.3 DETECTION FAILURE OF AWF DETECTION UNIT<br>· 7.1.3 SETTING OF COOLING AIR PRESSURE<br>· 7.2.2 CUTTING TORQUE ADJUSTMENT |

Europäisches
Patentamt

European
Patent Office

Office européen
des brevets

# EUROPEAN SEARCH REPORT

Application Number

EP 18 15 3152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 3 290 141 A1 (FANUC CORP [JP]) 7 March 2018 (2018-03-07) * paragraphs [0096], [0105], [0113]; figures * * paragraph [0081] * | 1,2 | INV. B23H7/10 ADD. B23H7/20 G05B19/404 |
| Y | JP H05 200628 A (MITSUBISHI ELECTRIC CORP) 10 August 1993 (1993-08-10) * paragraph [0016] * * paragraph [0020]; figure 4 * | 1-9 | |
| Y | JP H07 112328 A (FANUC LTD) 2 May 1995 (1995-05-02) * paragraphs [0034] - [0037] * | 1-9 | |
| A,D | JP H04 117061 A (CANON KK) 17 April 1992 (1992-04-17) * abstract * | 1 | |
| A | JP 2010 162631 A (MITSUBISHI ELECTRIC CORP) 29 July 2010 (2010-07-29) * abstract * | 7-9 | TECHNICAL FIELDS SEARCHED (IPC) |
| A | US 2012/037601 A1 (WATANABE KOHTAROH [JP] ET AL) 16 February 2012 (2012-02-16) * abstract * | 1,7-9 | B23H G05B |

The present search report has been drawn up for all claims

| Place of search | Date of completion of the search | Examiner |
|---|---|---|
| The Hague | 31 May 2018 | Jaeger, Hein |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 3152

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2018

| Patent document cited in search report | | Publication date | Patent family member(s) | | Publication date |
|---|---|---|---|---|---|
| EP 3290141 | A1 | 07-03-2018 | CN | 107790831 A | 13-03-2018 |
| | | | EP | 3290141 A1 | 07-03-2018 |
| | | | JP | 2018034260 A | 08-03-2018 |
| | | | KR | 20180025258 A | 08-03-2018 |
| | | | US | 2018056418 A1 | 01-03-2018 |
| JP H05200628 | A | 10-08-1993 | JP | 2662682 B2 | 15-10-1997 |
| | | | JP | H05200628 A | 10-08-1993 |
| JP H07112328 | A | 02-05-1995 | NONE | | |
| JP H04117061 | A | 17-04-1992 | NONE | | |
| JP 2010162631 | A | 29-07-2010 | JP | 5383213 B2 | 08-01-2014 |
| | | | JP | 2010162631 A | 29-07-2010 |
| US 2012037601 | A1 | 16-02-2012 | CN | 102387887 A | 21-03-2012 |
| | | | DE | 112009004639 T5 | 09-08-2012 |
| | | | JP | 5241916 B2 | 17-07-2013 |
| | | | JP | WO2010116412 A1 | 11-10-2012 |
| | | | US | 2012037601 A1 | 16-02-2012 |
| | | | WO | 2010116412 A1 | 14-10-2010 |

EPO FORM P0459

For more details about this annex : see Official Journal of the European Patent Office, No. 12/82

**EP 3 354 391 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4117061 A